# EUROPEAN PATENT APPLICATION

(11) **EP 1 881 218 A1**
(43) Date of publication of application: **23.01.2008**
(21) Application number: 06746111.1
(22) Date of filing: 09.05.2006
(51) Int. Cl.: F16D 3/224

(54) **FIXED TYPE CONSTANT VELOCITY UNIVERSAL JOINT**

(30) Priority: 12.05.2005 JP 2005140176; 12.05.2005 JP 2005140162; 12.05.2005 JP 2005140154
(71) Applicant: NTN Corporation, Osaka-shi, Osaka 550-0003 (JP)
(72) Inventor: KADOTA, Tetsurou C/o NTN CORPORATION, hi Shizuoka; 4380037 (JP)
(74) Representative: Mischung, Ralf
(86) International application number: PCT/JP2006/309280
(87) International publication number: WO 2006/121024

(57) **Abstract**

The present invention provides a fixed type constant velocity universal joint capable of realizing high operating angles compared to the prior art by allowing balls to protrude outside of an outer joint member without dropping out therefrom. The present invention is arranged in that in a Rzeppa type constant velocity universal joint, ball centroids of both guide grooves of an outer joint member and an inner joint member are defined to be a common arc that overlaps with each other about a joint center at portions except for central portions of the guide grooves in a joint axial direction, and the central portions of the guide grooves in the joint axial direction are biased inward from the common arc in a radial direction such that the portions intersect with each other and become mirror-symmetric with respect to the joint center in the axial direction. Alternatively, ball centroids of both guide grooves are defined to be a pair of main arcs and an auxiliary arc. The main arcs intersect with each other at central portions of the guide grooves in a joint axial direction. The main arcs are mirror-symmetric with respect to a joint center in the axial direction in which each center of the curvature of the main arcs is equally offset from the joint center so as to shorten (or lengthen) each radius of curvature as well as equally offset from the joint center in opposite directions in a joint axial direction. The auxiliary arc has a center of curvature thereof at the joint center and is extended from an end portion of the arc of the inner joint member on a joint back side. In a case of offsetting in a direction in which the radius of curvature is rendered longer, the auxiliary arc is extended also from an end portion on the joint inlet side.

## Description

### TECHNICAL FIELD

A fixed type constant velocity universal joint of the present invention is arranged in that a rotational axis of a driving side and a rotational axis of a driven side are coupled with each other for enabling torque transmission at a constant angular speed in a condition in which both axes form an angle such that angular displacement can be simply performed without plunging, and it is applicable as a fixed type constant velocity universal joint that is used for power transmission in vehicles and other various industrial machinery.

### BACKGROUND OF THE INVENTION

Fixed type constant velocity universal joints are generally used at axle joint portions of drive shafts and shaft fold joint portions of steering shafts of automobiles. Rzeppa type constant velocity universal joints and undercut free type (hereinafter referred to as "UJ type") constant velocity universal joints are conventionally known as such types of fixed type constant velocity universal joints. Rzeppa type joints are characterized in that a ball centroid of a guide groove of an outer joint member and a ball centroid of a guide groove of an inner joint member respectively form meridians of two spheres whose centers are located at points that are equally distant from a joint center in an axial direction, respectively (see Patent Document 1: US Patent No. 2046584).

In contrast thereto, UJ-type constant velocity universal joints have been devised to achieve higher operating angles than Rzeppa type constant velocity universal joints, wherein each ball centroid of guide grooves of an outer joint portion is arranged in that a portion of the ball centroid located on an opening side of the outer joint portion from a section perpendicular to an axis extending through the joint center forms a straight line that is parallel to the joint axis (see Patent Document 2: Japanese Unexamined Patent Publication No. S53-65547).

Rzeppa type constant velocity universal joints as devised by Rzeppa were first arranged in that centers of the ball centroid of the guide groove of the outer joint member and the ball centroid of the guide groove of the inner joint member were both located at the joint center and thus formed identical arcs (Patent Document 3: US Patent No. 1,665,280). It is a drawback of such an universal joint that a rotating position of the retainer could not be stably fixed at an operating angle of 0 degrees, and for the purpose of coverage, an additional part for controlling the position of the retainer was provided between the inner joint portion and the outer joint portion (see Patent Document 4: pilot pin K of Figs. 1 and 2 of US Patent No. 2,010,899).

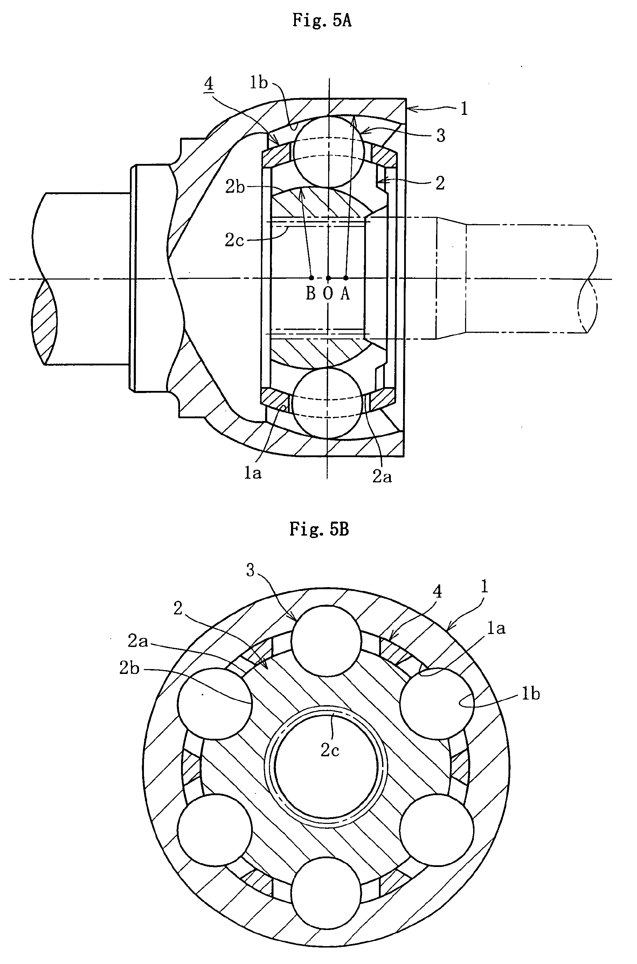

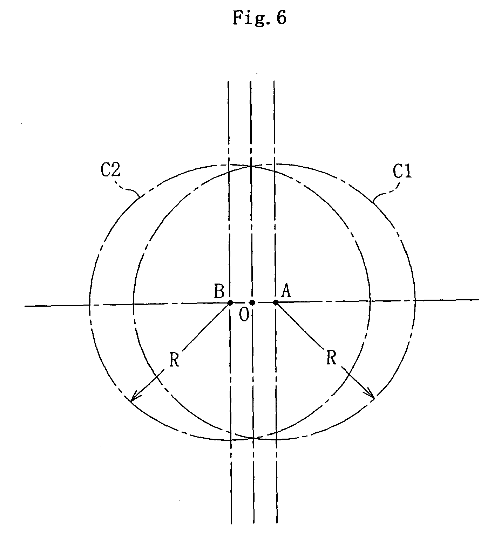

Rzeppa type constant velocity universal joints that have been revised thereafter are referred to as so-called double offset type wherein ball centroids C1, C2 of two guide grooves 1b, 2b of an outer joint member 1 and an inner joint member 2 are defined to be circles of an identical radius R around centers A, B that are equally distant from the joint center O in opposite directions in joint axial linear directions as shown in Figs. 5A, 5B and 6. As particularly shown in Figs. 5A and 5B, a double offset type constant velocity universal joint is comprised of an outer joint member 1 having a spherical inner peripheral surface 1a formed with six curved guide grooves 1b in axial directions, an inner joint member 2 having a spherical outer peripheral surface 2a formed with six curved guide grooves 2b in the axial direction and a spline (or serration) hole 2c, torque transmitting balls 3 one each disposed in six ball tracks formed by the guide grooves 1b of the outer joint member 1 and the guide grooves 2b of the inner joint member 2 in cooperation with each other, and a retainer 4 for holding the torque transmitting balls 3.

Both, a center of curvature of the inner peripheral surface 1a of the outer joint member 1 and a center of curvature of the outer peripheral surface 2a of the inner joint member 2 coincide with the joint center O. A center of curvature A of the guide grooves 1b of the outer joint member 1 and a center of curvature B of the guide grooves 2b of the inner joint member 2 are offset from the joint center O into opposite sides by equal distances in the axial direction (in the example as shown in Fig. 5A, the center A is offset towards an opening side of the joint while the center B is offset towards a back portion of the joint). Accordingly, the ball tracks formed by the guide grooves 1b, 2b in cooperation with each other assume a wedge-like shape that is open towards one side in the axial direction (in the example as shown in Fig. 5A, towards the opening side of the joint in view of assembly of the joint).

In case the two axes are not angularly displaced as shown in Fig. 5A, that is, when the rotating axial lines of the two axes become one straight line, centers of all torque transmitting balls 3 including the joint center O are located within a plane that is perpendicular to the rotating axial lines. When the outer joint member 1 and the inner joint member 2 are angularly displaced by angle θ, the torque transmitting balls 3 are oriented by the retainer 4 within a plane dividing the angle θ into half such that constant velocity of the joint is secured.

In the double offset type constant velocity universal joint, when the joint is rotated at a high operating angle and balls 3 protrude outside from the guide grooves 1b of the outer joint member 1, it is impossible to prevent the balls 3 from jumping outside in a radial direction through a window of the retainer 4. It is accordingly necessary to surely keep the balls 3 within the guide grooves 1b of the outer joint member 1 in such a conventional double offset type constant velocity universal joint such that a maximum operating angle of the joint was restricted to approximately 48 degrees at the utmost.

On the other hand, UJ type constant velocity universal joints have been devised for the purpose of further increasing operating angles of Rzeppa type constant velocity universal joints, wherein a ball centroid of guide grooves of an outer joint member was changed from an arc-like shape to a linear shape only at an inlet portion of the outer joint member for the purpose of extending positions at which balls came off the guide grooves of the outer joint member. However, it was also the case with an UJ type constant velocity universal joint that the maximum operating angle thereof was approximately 52 degrees at maximum.

For the purpose of further increasing the operating angle of the joint to, for instance, approximately 60 degrees, it is necessary to allow the balls to protrude from the guide grooves of the outer joint member. At this time, when the ball guide surface of the retainer is flat, balls will fall off to outside through the window of the retainer so that the constant velocity universal joint will lose its functions.
Patent Document 1: US Patent No. 2,046,584
Patent Document 2: Japanese Unexamined Patent Publication No. S53-65547
Patent Document 3: US Patent No. 1,665,280
Patent Document 4: US Patent No. 2,010,899 (Pilot pin K of Figs. 1 and 2)

### SUMMARY OF THE INVENTION

It is an object of the present invention to provide a fixed type constant velocity universal joint capable of realizing a high operating angle compared to the prior art by allowing balls to protrude outside of outer joint member without dropping out therefrom.

### Means to Solve the Object

For solving the above problems, a first aspect of the present invention is characterized in that in a fixed type constant velocity universal joint, ball centroids of both guide grooves of an outer joint member and an inner joint member are defined to be a common arc that overlaps with each other about a joint center at portions except for central portions of the guide grooves in a joint axial direction, and in that the central portions of the guide grooves in the joint axial direction are biased inward from the common arc in a radial direction such that the central portions intersect with each other and are mirror-symmetric with respect to the joint center in the axial direction.

The constant velocity universal joint of the present invention is arranged in that when the joint is bent by more than approximately 10 degrees, ball centroids of both guide grooves of the outer joint member and the inner joint member will define an identical circle (arc) about the joint center. With this arrangement, central positions of the balls does not bear off from the joint center even when a large operating angle is assumed, and the guide grooves of the outer joint member do not need to extend long on the opening side, and the marginal operating angle at which a shaft coupled to the inner joint member interferes the outer joint member can be increased. For instance, at a high operating angle exceeding 50 degrees and closing to 60 degrees, a part of the balls will protrude from the guide grooves of the outer joint member, but by defining the spacing of opposing ball guide surfaces on the outer diameter side of the retainer to be narrower than the ball diameter, it is possible to maintain the balls on the guide groove side of the inner joint member by the retainer also on the outer side of the outer joint member so that it is possible to prevent the balls from dropping out of the retainer.

The present invention is arranged in that the central portions of both guide grooves in the joint axial direction of the outer joint member and the inner joint member are biased inward in the radial direction from the common arc that overlap with each other at portions except for the central portions of the guide grooves in the joint axial direction such that the central portions intersect with each other and are mirror-symmetric with respect to the joint center in the axial direction. With this arrangement, it is possible to maintain the balls at the intersecting portion, that is, within a section perpendicular to the axis of the joint center so that the retainer can be held within the section perpendicular to the axis of the joint center at a joint operating angle of 0 degrees by holding the balls in the fixed position.

In the first aspect of the present invention, ball centroids of the central portions of the guide grooves can be comprised of an arc. By comprising the ball centroids of the central portions of the guide grooves by an arc, rolling movements of the balls when the joint assumes an operating angle can be made smooth.

In the first aspect of the present invention, ball centroids of the central portions of the guide grooves can be comprised of a straight line. By comprising the ball centroids of the central portions of the guide grooves by a straight line, processing of the guide grooves can be made easy. In this respect, by connecting both ends of the "straight line" to a common arc, rolling movements of the balls when the joint assumes an operating angle can be made smooth.

In the first aspect of the present invention, it is possible to define ball centroids of both inner and outer guide grooves of some ball tracks from among a plurality of ball tracks to comprise a common arc that overlaps with each other at portions except for central portions of the guide grooves in the joint axial direction, and to bias the central portions of the guide grooves in the joint axial direction inside from the common arc in a radial direction such that the central portions intersect with each other and are mirror-symmetric with respect to the joint center in the axial direction, while the remaining ball tracks are arranged such that ball centroids of both inner and outer guide grooves define a single arc respectively that entirely overlap with each other.

While the number of ball tracks is usually 6 or 8 or even more, ball centroids of, for instance, 3 or 4 ball tracks (that is, every other ball track) are defined to be as a first aspect of the present invention while the ball centroids of both inner and outer guide grooves for the remaining ball tracks are defined to be a single arc respectively that entirely overlap with each other. With this arrangement, the retainer can be maintained within the section perpendicular to the axis of the joint center at a joint operating angle of 0 degrees and the transmissible torque can be further increased.

An second aspect of the present invention is characterized in that in a fixed type constant velocity universal joint, ball centroids of both guide grooves of an outer joint member and an inner joint member are defined to be a pair of main arcs that intersect with each other at central portions of the guide grooves in a joint axial direction and that are mirror-symmetric in the axial direction with respect to the joint center, wherein each center of the curvature of the main arcs is equally offset from the joint center so as to shorten each radius of curvature as well as each center of the curvature is equally offset from the joint center in opposite directions in a joint axial direction and an auxiliary arc having a center of curvature thereof at the joint center that is extended from an end portion of the arc of the inner joint member on a joint back side.

In the constant velocity universal joint of the second aspect of the present invention, the auxiliary arc of the ball centroid of the inner joint member is defined to be an arc centering about the joint center, the central position of the balls does not bear off from the joint center even when a large opening angle is assumed. The guide grooves of the outer joint member do not need to extend long on the opening side, and the marginal operating angle at which a shaft coupled to the inner joint member interferes the outer joint member can be increased. For instance, at a high operating angle exceeding 50 degrees and closing to 60 degrees, a part of the balls will protrude from the guide grooves of the outer joint member, but by defining the spacing of opposing ball guide surfaces on the outer diameter side of the retainer to be narrower than the ball diameter, it is possible to embrace the balls on the guide groove side corresponding to the auxiliary arc that comprises the ball centroid of the inner joint member by the retainer also on the outer side of the outer joint member so that it is possible to prevent the balls from dropping out of the retainer.

In the second aspect of the present invention, ball centroids of both guide grooves of the outer joint member and the inner joint member are arranged as a pair of main arcs and an auxiliary arc. The main arcs intersect with each other at central portions of the guide grooves in a joint axial direction and that are mirror-symmetric with respect to the joint center in the axial direction. The centers of main arc curvature are equally offset from the joint center so as to shorten each radius of curvature as well as equally offset from the joint center in opposite directions in a joint axial direction. The auxiliary arc has a center of curvature thereof at the joint center and is extended from an end portion of the arc of the inner joint member on a joint back side. The balls, therefore, can be maintained at the intersecting portion, that is, within the section perpendicular to the axis extending through the joint center so that the retainer can be maintained within the section perpendicular to the axis extending through the joint center at a joint operating angle of 0 degrees by holding the balls at the fixed position.

As a modified example of the second aspect of the present invention, it is also possible to employ an arrangement in which, from among the plurality of ball tracks, some of the ball tracks are arranged such that ball centroids of both guide grooves of the outer joint member and the inner joint member comprise a pair of main arcs that intersect with each other at a central portion of the guide grooves in a joint axial direction and that are mirror-symmetric in the axial direction with respect to the joint center, wherein the arcs are comprised of main arcs whose centers of curvature are equally offset from the joint center so as to shorten each radius of curvature as well as equally offset from the joint center in opposite directions in a joint axial direction and an auxiliary arc having a center of curvature thereof at the joint center that is extended from an end portion of the arc of the inner joint member on a joint back side, while the remaining ball tracks are arranged such that ball centroids of both inner and outer guide grooves define a single arc respectively that entirely overlap with each other.

While the number of ball tracks is usually 6 or 8 or even more, ball centroids of, for instance, 3 or 4 ball tracks (that is, every other ball track) are defined to be as in the second aspect of the present invention while each ball centroid of both inner and outer guide grooves for the remaining ball tracks is defined to be a single arc that entirely overlaps with each other. With this arrangement, the retainer can be maintained within the section perpendicular to the axis of the joint center at a joint operating angle of 0 degrees and the transmissible torque can be further increased.

A third aspect of the present invention is characterized in that in a fixed type constant velocity universal joint, ball centroids of both guide grooves of an outer joint member and an inner joint member are defined to be a pair of main arcs that intersect with each other at central portions of the guide grooves in a joint axial direction and that are mirror-symmetric with respect to the joint center in the axial direction, wherein the arcs are comprised of main arcs whose centers of curvature are equally offset from the joint center so as to lengthen each radius of curvature as well as equally offset from the joint center in opposite directions in the joint axial direction and an auxiliary arc having a center of curvature thereof at the joint center that is extended from an end portion of the arc of the inner joint member on a joint back side.

In the constant velocity universal joint of the third aspect of the present invention, the auxiliary arc of the ball centroid of the inner joint member is defined to be an arc centering about the joint center, the central position of the balls does not bear off from the joint center even when a large operating angle is assumed. The guide grooves of the outer joint member do not need to extend long on the opening side, and the marginal operating angle at which a shaft coupled to the inner joint member interferes the outer joint member can be increased. For instance, at a high operating angle exceeding 50 degrees and closing to 60 degrees, a part of the balls will protrude from the guide grooves of the outer joint member, but by defining the spacing of opposing ball guide surfaces on the outer diameter side of the retainer to be narrower than the ball diameter, it is possible to embrace the balls on the guide groove side corresponding to the auxiliary arc that comprises the ball centroid of the inner joint member by the retainer also on the outer side of the outer joint member so that it is possible to prevent the balls from dropping out of the retainer.

The third aspect of the present invention is arranged in that ball centroids of both guide grooves of the outer joint member and the inner joint member are arranged as a pair of main arcs that intersect with each other at central portions of the guide grooves in a joint axial direction and that are mirror-symmetric with respect to the joint center in the axial direction, wherein the arcs are comprised of main arcs whose centers of curvature are equally offset from the joint center so as to lengthen each radius of curvature as well as equally offset from the joint center in opposite directions in a joint axial direction. The balls, therefore, can be maintained at the intersecting portion, that is, within the section perpendicular to the axis extending through the joint center so that the retainer can be maintained within the section perpendicular to the axis extending through the joint center at a joint operating angle of 0 degrees by holding the balls at the fixed position.

As a modified example of the third aspect of the present invention, it is also possible to employ an arrangement in which, from among the plurality of ball tracks, some of the ball tracks are arranged such that ball centroids of both guide grooves of the outer joint member and the inner joint member comprise a pair of main arcs that intersect with each other at a central portion of the guide grooves in a joint axial direction and that are mirror-symmetric with respect to the joint center in the axial direction, wherein the arcs are comprised of main arcs whose centers of curvature are equally offset from the joint center so as to lengthen each radius of curvature as well as equally offset from the joint center in opposite directions in a joint axial direction, and an auxiliary arc having a center of curvature thereof at the joint center that is extended from an end portion on a joint back side and an end portion on a joint inlet side of the main arc of the inner joint member, while the remaining ball tracks are arranged as a single arc respectively in which ball centroids of both inner and outer guide grooves entirely overlap with each other.

While the number of ball tracks is usually 6 or 8 or even more, ball centroids of, for instance, 3 or 4 ball tracks (that is, every other ball track) are defined to be as in the third aspect of the present invention while the ball centroids of both inner and outer guide grooves for the remaining ball tracks are defined to be a single arc respectively that entirely overlap with each other. With this arrangement, the retainer can be maintained within the section perpendicular to the axis of the joint center at a joint operating angle of 0 degrees and the transmissible torque can be further increased.

In the first to third aspects of the present invention, the ball tracks may assume wedge-like shapes that are open towards the opening side of the joint. With this arrangement, assembly of the fixed type constant velocity universal joint, that is, the operability of assembling the inner joint member and the retainer to the inside of the outer joint member can be made favorable, and the marginal operating angle at which a shaft coupled to the inner joint member interferes the outer joint member can be further increased.

In the first to third aspects of the present invention, the ball guide surfaces, which are surfaces within the window of the retainer and which mutually oppose in the axial direction of the joint, can be formed as a parallel flat surface on the inner radial side and also as to become inwardly narrower so as to embrace the balls on the outer radial side. With this arrangement, it is possible to embrace the balls on the guide groove side of the inner joint member by the retainer when a part of the balls protrude outside from the guide grooves of the outer joint member during operating the joint at high operating angles so as to prevent the balls from dropping out of the retainer.

In the first to third aspects of the present invention, it is possible to define the inner radial surface of the retainer on the opening side of the joint to be a cylindrical surface and to attach a guide ring for slidably guiding a spherical outer peripheral surface of the inner joint member to the cylindrical surface, and a fastening ring for retaining the guide ring. When the ball guide surface of the retainer is inwardly narrowed on the outer side, it is impossible to insert balls into the window from the outer radial side of the retainer when assembling the joint. While the balls need to be inserted into the window from the inner radial side of the retainer, this will necessitate a cylindrically shaped inner radial surface of the retainer on the opening side of the joint because the inner joint member needs to be inserted into the retainer from the joint opening side. When the cylindrical surface is left as it is, it will not function to retain the inner joint member. The guide ring and the fastening ring are thus used for retaining the inner joint member.

### BRIEF DESCRIPTION OF THE DRAWINGS

Fig. 1A is a sectional view of a fixed type constant velocity universal joint according to the present invention.
Fig. 1B is a sectional view of a fixed type constant velocity universal joint according to the present invention.
Fig. 2AI is a diagram showing a ball centroid of a guide groove of an outer joint member in an exaggerated manner.

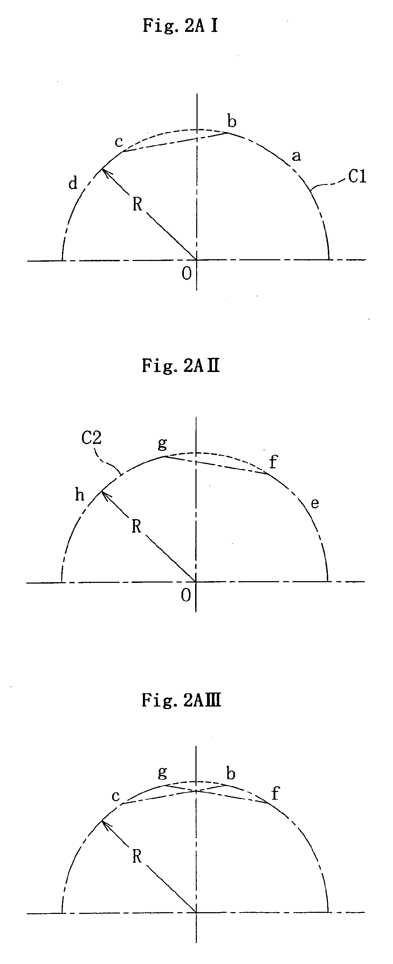

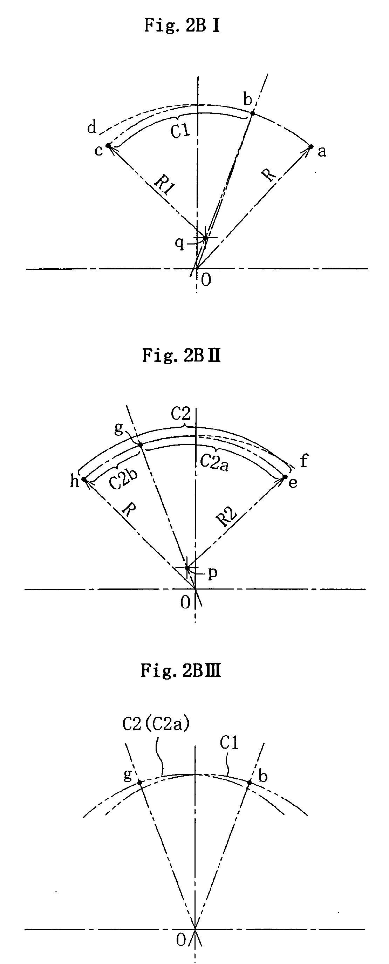

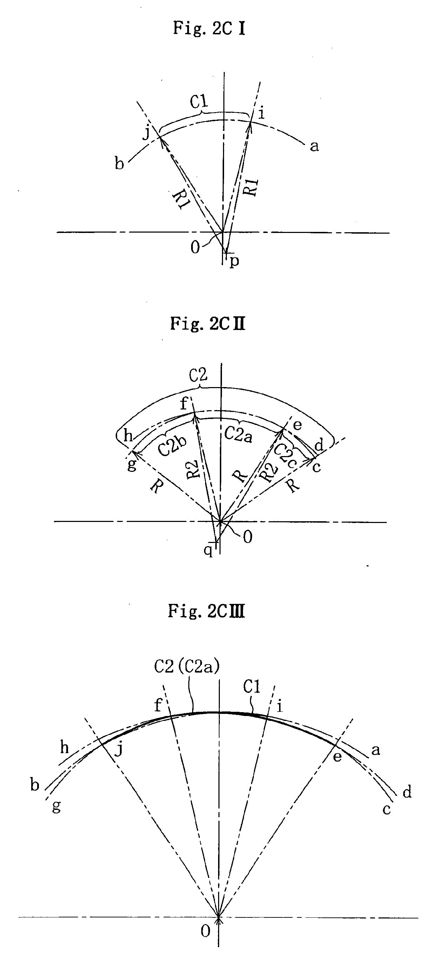

Fig. 2AII is a diagram showing a ball centroid of a guide groove of an inner joint member in an exaggerated manner.
Fig. 2AIII is a diagram showing ball centroids of both guide grooves of the outer joint member and inner joint member in an overlapped manner.
Fig. 2BI is a diagram showing a ball centroid of a guide groove of an outer joint member in an exaggerated manner.
Fig. 2BII is a diagram showing a ball centroid of a guide groove of an inner joint member in an exaggerated manner.
Fig. 2BIII is a diagram showing ball centroids of both guide grooves of the outer joint member and inner joint member in an overlapped manner.
Fig. 2CI is a diagram showing a ball centroid of a guide groove of an outer joint member in an exaggerated manner.
Fig. 2CII is a diagram showing a ball centroid of a guide groove of an inner joint member in an exaggerated manner.
Fig. 2CIII is a diagram showing ball centroids of both guide grooves of the outer joint member and inner joint member in an overlapped manner.

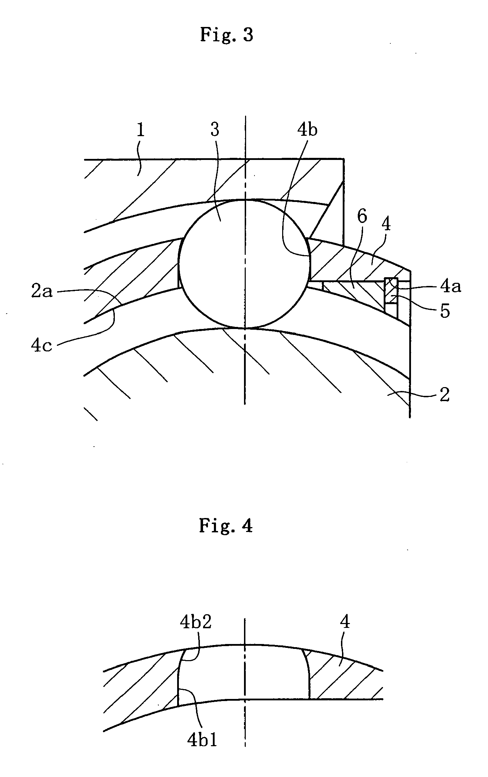

Fig. 3 is an enlarged sectional view of a ball portion of a retainer.
Fig. 4 is an enlarged sectional view showing a shape of a ball guide surface of a window of the retainer in an exaggerated manner.
Fig. 5A is a longitudinal sectional view of a conventional Rzeppa type constant velocity universal joint.
Fig. 5B is a cross-sectional view of the conventional Rzeppa type constant velocity universal joint.
Fig. 6 is a diagram showing ball centroids of both guide grooves of an outer joint member and inner joint member of the conventional Rzeppa type constant velocity universal joint.

### DETAILED DESCRIPTION OF THE PREFERRED INVENTION

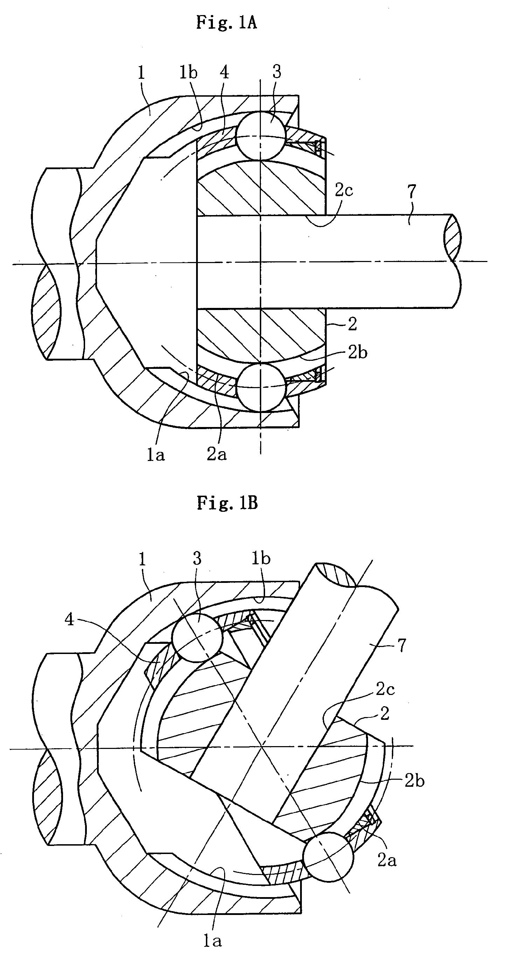

The first to third embodiments of the present invention will now be described on the basis of the drawings. Figs. 1A and 1B show a fixed type (Rzeppa type) constant velocity universal joint of the present invention that is common to each of the embodiments. Fig. 1A shows a condition of the constant velocity universal joint at an operating angle of 0 degrees and Fig. 1B a condition of a maximum operating angle. Component members of this constant velocity universal joint are basically identical to those of the constant velocity universal joint of Fig. 5, and identical portions are marked with identical reference numerals while repeated explanations will be omitted. The constant velocity universal joint is characterized by ball centroids C1, C2 of both guide grooves 1b, 2b of an outer joint member 1 and an inner joint member 2.

In a case of the fixed type constant velocity universal joint of the first embodiment, the ball centroid C1 of the guide groove 1b of the outer joint member 1 is basically a circle of radius R (arc abcd) about joint center O as shown in Fig. 2AI. Point a corresponds to an inlet of the guide groove 1b of the outer joint member 1, and point d corresponds to a back portion thereof. Further, the ball centroid C2 of the guide groove 2b of the inner joint member 2 is also basically a circle of radius R (arc efgh) about joint center O as shown in Fig. 2AII. In this manner, the two circles or centroids C1, C2 have a common center and identical radii so that when both ball centroids C1, C2 are laid on each other, they will completely overlap as shown in Fig. 2AIII except for vicinities of sections perpendicular to an axis through the joint center O.

Further, the two circles or the centroids C1, C2 are arranged in that vicinities of sections perpendicular to an axis through the joint center O separate from the circle to be biased inwardly. In the illustrated case, the ball centroid C1 of the outer joint member 1 assumes an inclined straight line cb proximate of the section perpendicular to the axis and the ball centroid C2 of the inner joint member 2 assumes an inclined straight line fg proximate of the section perpendicular to the axis. The inclined straight line cb and the inclined straight line fg are mirror-symmetric to the right and left of the section perpendicular to the axis when the two ball centroids C1, C2 are overlapped as shown in Fig. 2AIII, wherein the inclined straight line cb and the inclined straight line fg intersect to be left-right symmetry within the section perpendicular to the axis in an inner region of the circle and the distances from the section perpendicular to the axis are identical between b and g and also between c and f.

An inner radial surface of a retainer 4 on the opening side of the joint is common to all embodiments, and is defined, as shown in Fig. 3, to be a cylindrical surface of constant inner radius along a specified width, and a fastening ring 5 (circlip) is fitted at a groove portion 4a formed at the cylindrical surface. A guide ring 6 is fitted at an annular wedge-like space that is formed between the fastening ring 5 and a window 4b of the retainer 4 while becoming narrower to the back. The guide ring 6 is arranged in that its inner peripheral surface fits a spherical outer peripheral surface 2a of the inner joint member 2 and its outer peripheral surface fits a spherical inner surface 4c of the retainer 4. An outer end of the guide ring 6 abuts against an inner surface of the fastening ring 5. A specified distance is maintained between an inner end of the guide ring 6 and balls 3.

The ball guide surface of the window 4b of the retainer 4 is common to all embodiments, wherein its outer radial side reduces in width as shown in Fig. 4. In other words, while the inner radial side of the ball guide surface is comprised of straight lines 4b1 that are parallel to each other with a distance identical to the ball diameter, the outer radial side of the ball guide surface is tapered to have a distance that is slightly narrower than the ball diameter. While the narrowed portion is possible to comprise inclined straight lines, it is preferably comprised as a concave arc 4b2 that matches an outer peripheral curvature of the balls to achieve reductions in abutting surface pressure with the balls.

The fixed type constant velocity universal joint according to the first embodiment of the present invention is arranged in the above described manner, and when the joint is bent by more than approximately 10 degrees, both of the ball centroids C1, C2 of the two guide grooves 1b, 2b of the outer joint member 1 and the inner joint member 2 comprise an identical circle (arc) about the joint center. Accordingly, even when a large operating angle is assumed, central positions of the balls 3 would not bear off from the joint center so that the guide groove 1b of the outer joint member 1 does not need to extend long on the opening side thereof, and the marginal operating angle at which a shaft 7 coupled to the inner joint member 2 interferes the outer joint member 1 can be increased. For instance, at a high operating angle exceeding 50 degrees and closing to 60 degrees, a part of the balls 3 will protrude from the guide groove 1b of the outer joint member 1, but by defining the spacing of opposing ball guide surfaces on the outer diameter side of the retainer 4 to be narrower than the ball diameter, it is possible to embrace the balls 3 on the guide groove 2b side of the inner joint member 2 by the retainer 4 also on the outer side of the outer joint member 1 so that it is possible to prevent the balls 3 from dropping out of the retainer 4.

Further, since the central portions in the joint axial direction of two guide grooves 1b, 2b of the outer joint member 1 and the inner joint member 2 are biased in a radial direction from the common arcs cd, ef that overlap with each other at portions except for central portions of the guide grooves 1b, 2b in the joint axial direction such that the portions intersect with each other and such that they are mirror-symmetric in the axial direction with respect to the joint center between the both arcs, it is possible to maintain the balls 3 at the intersecting portion, that is, within a section perpendicular to the axis through the joint center O, and the retainer 4 can be maintained within the section perpendicular to the axis through the joint center O at a joint operating angle of 0 degrees by holding the balls 3 at a fixed position.

While the first embodiment of the present invention has been explained so far, the present invention is not limited to the above embodiment but may be modified in a variety of ways, and while the portions of the ball centroids C1, C2 that have been biased inside in the radial direction proximate of the section perpendicular to the joint axis have been defined to be inclined straight lines bc, fg in the above embodiment, all that is necessary is to bias these portion inside in a mirror-symmetric state so that it is also possible to smoothly connect to the points b, c or points f, g through a large arc having a radius of curvature that is larger than R or through other curves instead of the straight lines bc, fg.

In the fixed type constant velocity universal joint of the second embodiment, the ball centroid C1 of the guide groove 1b of the outer joint member 1 is a main arc bc of radius R1 about a point q offset from the joint center O towards a first quadrant as shown in Fig. 2BI. Point b corresponds to the inlet of the guide groove 1b of the outer joint member 1 and point c corresponds to a back portion thereof. In this respect, the arc abd is an arc having a radius R (>R1) about the joint center O and has been drawn for ease of visual understanding effects of offsetting the point q.

Further, as shown in Fig. 2BII, while the ball centroid C2 of the guide groove 2b of the inner joint member 2 is a compound centroid of centroid C2a and centroid C2b, most of the part is comprised of the centroid C2a, that is, a main arc eg of radius R2 about a point p offset from the joint center O towards a second quadrant. The radius R2 is identical to the radius R1, and the main arc bc and the main arc eg intersect with each other in a section extending through the joint center O and perpendicular to a joint axial line and are also mirror-symmetric with respect to the joint center O in the axial direction. Accordingly, points b and g as well as points c and e are apart from the section perpendicular to the axis through the joint center O by an equal distance. An auxiliary arc gh of radius R about the joint center O is smoothly connected to an end portion on the joint back side of the main arc eg. In this respect, the arc fgh is an arc of radius R (>R2) about the joint center O that has been drawn for ease of quantitatively understanding effects of offset of point p.

The fixed type constant velocity universal joint according to the second embodiment of the present invention is arranged in the above described manner. Since the auxiliary arc gh, which is a ball centroid of the inner joint member 2, is an arc about the joint center O so that the central position of the balls 3 does not bear off from the joint center even when a large operating angle is assumed. Accordingly the guide groove 1b of the outer joint member 1 does not need to extend long on the opening side, and the marginal operating angle at which a shaft 7 coupled to the inner joint member 2 interferes the outer joint member 1 can be increased. For instance, at a high operating angle exceeding 50 degrees and closing to 60 degrees, a part of the balls 3 will protrude from the guide groove 1b of the outer joint member 1, however by defining an opposition distance of ball guide surface on the outer diameter side of the retainer 4 to be narrower than the ball diameter, it is possible to embrace the balls 3 on the guide groove 2b side corresponding to the auxiliary arc gh that comprises the ball centroid C2b of the inner joint member 2 by the retainer 4 also on the outer side of the outer joint member 1 so that it is possible to prevent the balls 3 from dropping out of the retainer 4.

Further, as shown in Fig. 2BIII, since the ball centroids C1, C2 of the two guide grooves 1b, 2b of the outer joint member 1 and the inner joint member 2 include a pair of main arcs C1, C2a that intersect with each other at central portions of the guide grooves 1b, 2b in the joint axial direction and that are mirror-symmetric in the axial direction with respect to the joint center O between the main arcs, wherein centers of curvature p, q of the main arcs C1, C2a are equally offset from the joint center O so as to shorten the radii of curvature as well as equally offset from the joint center O in opposite directions in a joint axial direction, it is possible to maintain the balls 3 at the intersecting portion, that is, the section perpendicular to the axis through the joint center O so that the retainer 4 can be held within the section perpendicular to the axis through the joint center O at a joint operating angle of 0 degrees by holding the balls 3 at fixed positions.

In the fixed type constant velocity universal joint of the third embodiment, the ball centroid C1 of the guide groove 1b of the outer joint member 1 is a main arc ij of radius R1 about a point p offset from the joint center O towards a fourth quadrant as shown in Fig. 2CI. Point i corresponds to the inlet of an outer ring guide groove and point j corresponds to an end of the outer ring guide groove. In this respect, arcs ai and jb are mere extensions of the main arc ij of radius R1.

Further, as shown in Fig. 2CII, while the ball centroid C2 of the guide groove 2b of the inner joint member 2 is a compound centroid of centroid C2a, centroid C2b and centroid C2c, most of the part is comprised of the centroid C2a, that is, a main arc ef of radius R2 about point q offset from the joint center O towards a third quadrant. The radius R2 is identical to the radius R1, and the main arc ij and the main arc ef intersect with each other in a section extending through the joint center O and perpendicular to a joint axial line and are also mirror-symmetric with respect to the joint center O in the axial direction. Therefore, points i and f as well as points j and e are apart from the section perpendicular to the axis through the joint center O by an equal distance. An auxiliary arc fg of radius R about the joint center O is smoothly connected to an end portion on the joint back side of the main arc ef. Further, an auxiliary arc ec about the joint center O is smoothly connected to an end portion on the joint inlet side of the main arc ef. In this respect, the arc de and arc fh are arcs of radius R2 about point q, and these arcs have been drawn for ease of visually understanding effects of offset of point q.

The fixed type constant velocity universal joint according to the third embodiment of the present invention is arranged in the above described manner, and even when a large operating angle is assumed, the auxiliary arc fg, which is a ball centroid of the inner joint member 2, will be an arc about the joint center O so that the central position of the balls 3 does not bear off from the joint center. Accordingly the guide groove 1b of the outer joint member 1 does not need to extend long on the opening side, and the marginal operating angle at which a shaft 7 coupled to the inner joint member 2 interferes the outer joint member 1 can be increased. For instance, at a high operating angle exceeding 50 degrees and closing to 60 degrees, a part of the balls 3 will protrude outside from the guide groove 1b of the outer joint member 1, but by defining the spacing of opposing ball guide surfaces on the outer diameter side of the retainer 4 to be narrower than the ball diameter, it is possible to maintain the balls 3 on the guide groove 2b side corresponding to the auxiliary arc gh that comprises the ball centroid C2b of the inner joint member 2 by the retainer 4 also on the outer side of the outer joint member 1 so that it is possible to prevent the balls 3 from dropping out of the retainer 4.

Further, as shown in Fig. 2CIII, the ball centroids C1, C2 of the two guide grooves 1b, 2b of the outer joint member 1 and the inner joint member 2 include a pair of main arcs C1, C2a that intersect with each other at central portions of the guide grooves 1b, 2b in the joint axial direction and that become mirror-symmetric with respect to the joint center O in the axial direction, wherein centers of curvature p, q of the main arcs C1, C2 are equally offset from the joint center O so as to lengthen the radii of curvature as well as equally offset from the joint center in opposite directions in a joint axial direction. It is, therefore, possible to maintain the balls 3 at the intersecting portion, that is, within the section perpendicular to the axis through the joint center O so that the retainer 4 can be held within the section perpendicular to the axis through the joint center O at a joint operating angle of 0 degrees by holding the balls 3 at fixed positions.

## Claims

1. A fixed type constant velocity universal joint, comprising:
an outer joint member formed with a plurality of guide grooves extending in an axial direction along a spherical inner peripheral surface;
an inner joint member formed with a plurality of guide grooves extending in an axial direction along a spherical outer peripheral surface;
torque transmitting balls each disposed in one of a plurality of ball tracks formed by the guide grooves of the outer joint member and the guide grooves of the inner joint member in cooperation with each other; and
a retainer for holding the torque transmitting balls, wherein:
ball centroids of both guide grooves of the outer joint member and the inner joint member are defined to be a common arc that overlaps with each other about a joint center at portions except for central portions of the guide grooves in a joint axial direction; and
the central portions of the guide grooves in the joint axial direction are biased inward from the common arc in a radial direction such that the central portions intersect with each other and are mirror-symmetric with respect to the joint center in the axial direction.

2. The fixed type constant velocity universal joint according to claim 1, wherein the ball tracks are of wedge-like shape that is open toward the opening side of the joint.

3. The fixed type constant velocity universal joint according to claim 1 or 2, wherein ball centroids of central portions of the guide grooves are comprised of arcs.

4. The fixed type constant velocity universal joint according to claim 1 or 2, wherein ball centerlines of central portions of the guide grooves are comprised of straight lines.

5. The fixed type constant velocity universal joint according to any one of claims 1 to 4, wherein ball guide surfaces, which comprise window inner surfaces of the retainer and which opposite each other in the axial direction of the joint, are formed as parallel planes on an inner radial side while they are narrowed to the inside so as to embrace the balls on an outer radial side.

6. The fixed type constant velocity universal joint according to any one of claims 1 to 5, wherein an inner radial surface of the retainer on the opening side of the joint is comprised as a cylindrical surface, and wherein the cylindrical surface is attached with a guide ring for slidably guiding a spherical outer peripheral surface of the inner joint member and a fastening ring for retaining the guide ring.

7. The fixed type constant velocity universal joint according to any one of claims 1 to 6, wherein:
ball centroids of both inner and outer guide grooves of some of ball tracks from among a plurality of ball tracks comprise a common arc that overlaps with each other at portions except for central portions of the guide grooves in the joint axial direction; and
the central portions of the guide grooves in the joint axial direction are biased inside from the common arc in the radial direction such that the central portions intersect with each other and are mirror-symmetric with respect to the joint center in the axial direction, while the remaining ball tracks are arranged such that ball centroids of inner and outer guide grooves define a single arc respectively that entirely overlap with each other.

8. A fixed type constant velocity universal joint, comprising:
an outer joint member formed with a plurality of guide grooves extending in an axial direction along a spherical inner peripheral surface;
an inner joint member formed with a plurality of guide grooves extending in an axial direction along a spherical outer peripheral surface;
torque transmitting balls each disposed in one of a plurality of ball tracks formed by the guide grooves of the outer joint member and the guide grooves of the inner joint member in cooperation with each other; and
a retainer for holding the torque transmitting balls, wherein:
ball centroids of both guide grooves of the outer joint member and the inner joint member are defined to be a pair of main arcs that intersect with each other at central portions of the guide grooves in a joint axial direction and that are mirror-symmetric with respect to a joint center in the axial direction, said ball centroids being comprised of main arcs whose centers of curvature are equally offset from the joint center so as to shorten each radius of curvature as well as equally offset from the joint center in opposite directions in a joint axial direction and of an auxiliary arc having a center of curvature thereof at the joint center and extended from an end portion of the arc of the inner joint member on a joint back side.

9. The fixed type constant velocity universal joint according to claim 8, wherein the ball tracks are of wedge-like shape that is open towards the opening side of the joint.

10. The fixed type constant velocity universal joint according to claim 8 or 9, wherein ball guide surfaces, which comprise window inner surfaces of the retainer and which opposite each other in the axial direction of the joint, are formed as parallel planes on an inner radial side while the surfaces are narrowed to the inside so as to embrace the balls on an outer radial side.

11. The fixed type constant velocity universal joint according to any one of claims 8 to 10, wherein an inner radial surface of the retainer on the opening side of the joint is comprised as a cylindrical surface, and wherein the cylindrical surface is attached with a guide ring for slidably guiding a spherical outer peripheral surface of the inner joint member and a fastening ring for retaining the guide ring.

12. The fixed type constant velocity universal joint according to any one of claims 8 to 11, wherein ball centroids of both inner and outer guide grooves of some of ball tracks from among a plurality of ball tracks comprise a pair of main arcs that intersect with each other at central portions of the guide grooves in the joint axial direction and that are mirror-symmetric with respect to the joint center in the axial direction, said ball centroids being comprised of main arcs whose centers of curvature are equally offset from the joint center so as to shorten each radius of curvature as well as equally offset from the joint center in opposite directions in a joint axial direction and an auxiliary arc having a center of curvature thereof at the joint center that is extended from an end portion of the arc of the inner joint member on a joint back side, while the remaining ball tracks are arranged such that ball centroids of both inner and outer guide grooves define a single arc respectively that entirely overlap with each other.

13. A fixed type constant velocity universal joint, comprising:
an outer joint member formed with a plurality of guide grooves extending in an axial direction along a spherical inner peripheral surface;
an inner joint member formed with a plurality of guide grooves extending in an axial direction along a spherical outer peripheral surface;
torque transmitting balls each disposed in one of a plurality of ball tracks formed by the guide grooves of the outer joint member and the guide grooves of the inner joint member in cooperation with each other; and
a retainer for holding the torque transmitting balls, wherein:
ball centroids of both guide grooves of the outer joint member and the inner joint member are defined to be a pair of main arcs that intersect with each other at central portions of the guide grooves in a joint axial direction and that are mirror-symmetric with respect to a joint center in the axial direction, said centroids being comprised of main arcs whose centers of curvature are equally offset from the joint center so as to lengthen each radius of curvature as well as equally offset from the joint center in opposite directions in a joint axial direction and an auxiliary arc having a center of curvature thereof at the joint center that is extended from an end portion of the arc of the inner joint member on a joint back side and from an end portion on a joint inlet side of the main arc of the inner joint member.

14. The fixed type constant velocity universal joint according to claim 13, wherein the ball tracks are of wedge-like shape that is open towards the opening side of the joint.

15. The fixed type constant velocity universal joint according to any one of claims 13 or 14, wherein ball guide surfaces, which comprise window inner surfaces of the retainer and which opposite each other in the axial direction of the joint, are formed as parallel planes on an inner radial side while they are narrowed to the inside so as to embrace the balls on an outer radial side.

16. The fixed type constant velocity universal joint according to any one of claims 13 to 15, wherein an inner radial surface of the retainer on the opening side of the joint is comprised as a cylindrical surface, and wherein the cylindrical surface is attached with a guide ring for slidably guiding a spherical outer peripheral surface of the inner joint member and a fastening ring for retaining the guide ring.

17. The fixed type constant velocity universal joint according to any one of claims 13 to 16, wherein ball centroids of both inner and outer guide grooves of some ball tracks from among a plurality of ball tracks comprise a pair of main arcs that intersect with each other at central portions of the guide grooves in the joint axial direction and that are mirror-symmetric with respect to the joint center in the axial direction, said centroids being comprised of main arcs whose centers of curvature are equally offset from the joint center so as to lengthen each radius of curvature as well as equally offset from the joint center in opposite directions in a joint axial direction and an auxiliary arc having a center of curvature thereof at the joint center that is extended from an end portion of the arc of the inner joint member on a joint back side and from an end portion on a joint inlet side of the main arc of the inner joint member, while the remaining ball tracks are arranged such that ball centroids of both inner and outer guide grooves define a single arc respectively that entirely overlap with each other.
